# EUROPÄISCHE PATENTSCHRIFT

(11) **EP 2 596 260 B1**
(45) Veröffentlichungstag und Bekanntmachung des Hinweises auf die Patenterteilung: **16.08.2017**
(21) Anmeldenummer: 11729936.2
(22) Anmeldetag: 08.06.2011
(51) Int. Cl.: F16D 27/108, F16D 27/11, F16D 27/112, F16D 27/118, F16D 41/04

(54) **ELEKTROMAGNETISCHE SCHALTKUPPLUNG ZUM VERBINDEN VON EINEM DAMPFMOTOR MIT EINEM VERBRENNUNGSMOTOR**
ELECTROMAGNETIC CLUTCH FOR CONNECTING A STEAM ENGINE TO A COMBUSTION ENGINE
EMBRAYAGE ÉLECTROMAGNÉTIQUE POUR RELIER UN MOTEUR À VAPEUR À UN MOTEUR À COMBUSTION INTERNE

(30) Priorität: 19.07.2010 DE 102010031498
(43) Veröffentlichungstag der Anmeldung: 29.05.2013
(73) Patentinhaber: Robert Bosch GmbH, 70442 Stuttgart (DE)
(72) Erfinder: EISENMENGER, Nadja, 70469 Stuttgart (DE); BRENK, Achim, 75236 Kaempfelbach (DE); MAGEL, Hans-Christoph, 72764 Reutlingen (DE); WENGERT, Andreas, 71549 Auenwald (DE)
(86) Internationale Anmeldenummer: PCT/EP2011/059506
(87) Internationale Veröffentlichungsnummer: WO 2012/010372

(56) Entgegenhaltungen:
- WO-A1-2004/065811
- WO-A1-2010/079386
- WO-A1-2010/099941
- GB-A- 1 554 766

## Beschreibung

### Stand der Technik

Die Erfindung betrifft das Gebiet der über einen Dampfkraftprozess antreibbaren Dampfmotoren, die mit einem Verbrennungsmotor verbunden sind.

Bei der Entwicklung von Verbrennungsmotoren kommt der Reduzierung des Kraftstoffverbrauchs eine hohe Bedeutung zu. Verbrennungsmotoren wandeln die Energie des Kraftstoffs in mechanische Energie zum Antrieb von Fahrzeugen um. Dabei wird ein großer Teil der Energie als Abwärme freigesetzt, die durch das Kühlsystem oder im Abgas vom Verbrennungsmotor weggeleitet wird. Um diese Wärmeenergie zu nutzen, ist es denkbar, dass der Verbrennungsmotor mit einem Dampfkraftprozess gekoppelt wird. Hierbei wird die Wärmeenergie aus dem Verbrennungsmotor zur Erzeugung von Dampf verwendet, der in einer Expansionsmaschine entspannt wird und somit weitere Energie bereitstellt, die zum Antrieb des Fahrzeugs genutzt werden kann.

Besonders eignet sich die Kombination von einem Verbrennungsmotor mit einem Dampfmotor zur Abwärmenutzung bei einem Nutzkraftwagen, da hier der Verbrennungsmotor eine große Leistung abgeben muss und somit eine große Wärmeenergie zur Dampferzeugung zur Verfügung steht.

Bei der Verbindung des Dampfmotors mit dem Verbrennungsmotor ist es denkbar, dass eine starre Kopplung besteht. Dies bedeutet allerdings, dass der Verbrennungsmotor bereits ab seinem Start den Dampfmotor mitschleppt, obwohl noch nicht genügend Dampfdruck für den Dampfmotor anliegt. Hierdurch ergibt sich der Nachteil, dass speziell beim Start des Verbrennungsmotors die Effizienz des Gesamtsystems entsprechend der Reibung des Dampfmotors verschlechtert wird. Allerdings kann dadurch der Dampfmotor vom Verbrennungsmotor angeschleppt werden, so dass der Dampfmotor nicht in einer ungünstigen Position stehen bleibt, in der er gegebenenfalls nicht von alleine anlaufen kann.

Ferner ist es denkbar, dass der Dampfmotor und der Verbrennungsmotor über einen zwischengeschalteten Freilauf miteinander verbunden sind. Hierdurch kann der Verbrennungsmotor frei drehen, wenn nicht genügend Dampfdruck für den Dampfmotor anliegt. Somit muss in diesem Fall der Verbrennungsmotor die zusätzliche Reibleistung des Dampfmotors nicht aufbringen. Hierbei besteht allerdings der Nachteil, dass der Verbrennungsmotor den Dampfmotor nicht mehr anschleppt, wodurch bei ungünstigen Stillstandspositionen des Dampfmotors abhängig von seiner Bauweise dieser gegebenenfalls nicht mehr von alleine anlaufen kann.

Das Dokument WO 2004/065811 A1 und das Dokument WO 2010/079386 A1 zeigen jeweils ein Kupplungselement, sowie ein Kupplungselement, welches mit einer Starter-Generator-Anordnung verbunden ist.

### Offenbarung der Erfindung

Die erfindungsgemäße elektromagnetische Schaltkupplung mit den Merkmalen des Anspruchs 1 hat den Vorteil, dass ein Anschleppen des Dampfmotors von dem Verbrennungsmotor bei einem verbesserten Wirkungsgrad des Gesamtsystems ermöglicht ist.

Durch die in den Unteransprüchen aufgeführten Maßnahmen sind vorteilhafte Weiterbildungen der im Anspruch 1 angegebenen elektromagnetischen Schaltkupplung möglich.

Der Dampfmotor ist in vorteilhafter Weise als Kolbenmaschine ausgestaltet. Hierbei sind verschiedene Typen von Kolbenmaschinen möglich. Hierdurch ist speziell für Anwendungen bei Kraftfahrzeugen eine optimierte Auslegung des Dampfmotors und somit ein hoher Wirkungsgrad erzielbar. Der Dampfmotor kann allerdings auch als andere Expansionsmaschine oder auch als Turbine ausgestaltet sein. Je nach Art sind die unterschiedlichen Typen des Dampfmotors in der Lage, bei anliegendem Dampfdruck von alleine zu starten. Speziell bei Kolbendampfmotoren mit kleiner Zylinderzahl, die auch aus Kosten- und Bauraumgründen vorteilhaft sind, besteht allerdings häufig das Problem, dass diese nicht in der Lage sind, selbst anzulaufen. Durch den Freilauf zwischen dem Verbrennungsmotor und dem Dampfmotor kann in der Startphase zunächst ein unerwünschtes Verringern des Wirkungsgrads vermieden werden. Sobald der erforderliche Dampfdruck aufgebaut ist, kann durch die elektromagnetische Betätigungskraft ein Reibschluss hergestellt werden, um den Freilauf zu überbrücken. Möglich ist es auch, dass ein Formschluss zum Überbrücken des Freilaufs erzeugt wird.

Somit kann nach der Warmlaufphase, wenn genügend Dampfdruck anliegt, über die elektromagnetische Betätigung, die entweder reibschlüssig oder formschlüssig den Freilauf überbrückt, die Drehbewegung des Verbrennungsmotors auf den Dampfmotor übertragen werden. Somit kann der Verbrennungsmotor als Starter für den Dampfmotor dienen. Nach dem Startvorgang kann die elektromagnetische Betätigung wieder ausgeschaltet werden. Der Dampfmotor kann nun seine Leistung über den jetzt gesperrten Freilauf an den Verbrennungsmotor abgeben.

Besonders vorteilhaft ist es, dass durch die elektromagnetische Betätigungskraft eine Reibkraft zwischen dem Zwischenrad und der Kupplungsglocke erzeugt wird. Hierdurch ist beim Aktivieren der Betätigung zum Überbrücken des Freilaufs eine vorteilhafte Mitnahme der ersten Welle zum Starten des Dampfmotors ermöglicht. Hierdurch ist ein gleichmäßiger Anlauf des Dampfmotors auch bei relativ hohen Drehzahlen des Verbrennungsmotors gewährleistet.

Vorteilhaft ist es, dass das Zwischenrad eine konische Reibfläche aufweist, dass die Kupplungsglocke eine konische Reibfläche aufweist, dass die konische Reibfläche des Zwischenrads und die konische Reibfläche der Kupplungsglocke einander zugewandt sind und dass durch die elektromagnetische Betätigungskraft die konische Reibfläche des Zwischenrads und die konische Reibfläche der Kupplungsglocke gegeneinander beaufschlagt werden. Hierdurch kann bei einer kompakten Bauweise eine hohe Reibkraft erzeugt werden, wodurch zum Starten des Dampfmotors hohe Kräfte von dem Verbrennungsmotor auf den Dampfmotor übertragen werden können.

Vorteilhaft ist es allerdings auch, dass das Zwischenrad eine ringförmige Reibfläche aufweist, dass die Kupplungsglocke eine ringförmige Reibfläche aufweist, dass die ringförmige Reibfläche des Zwischenrads und die ringförmige Reibfläche der Kupplungsglocke senkrecht zu einer Drehachse der ersten Welle orientiert und einander zugewandt sind und dass durch die elektromagnetische Betätigungskraft die ringförmige Reibfläche des Zwischenrads und die ringförmige Reibfläche der Kupplungsglocke gegeneinander beaufschlagt werden. Hierdurch ist ein vorteilhaftes Öffnen und Schließen der Reibverbindung zwischen der Kupplungsglocke und dem Zwischenrad ermöglicht.

Vorteilhaft ist es auch, dass die Kupplungsglocke zumindest teilweise aus einem ferromagnetischen Werkstoff gebildet ist. Hierdurch kann die Kupplungsglocke beispielsweise von einem Elektromagneten betätigt werden, um den Reibschluss herzustellen. Möglich ist es auch, dass an der Kupplungsglocke ein oder mehrere ferromagnetische Elemente angeordnet sind. Solche ferromagnetischen Elemente können beispielsweise in die Kupplungsglocke eingesetzt oder mit der Kupplungsglocke verbunden sein. Ein oder mehrere Elektromagnete sind hierbei den ferromagnetischen Elementen zugeordnet.

Außerdem ist es vorteilhaft, dass der Dampfmotor ein Gehäuseteil aufweist, dass eine Stirnseite der Kupplungsglocke dem Gehäuseteil zugewandt ist und dass an dem Gehäuseteil ein Elektromagnet angeordnet ist, der der Stirnseite der Kupplungsglocke zugeordnet ist. Hierdurch ist ein kompakter Aufbau des Gesamtsystems möglich. Vorteilhaft ist es hierbei auch, dass das Gehäuseteil des Dampfmotors aus einem ferromagnetischen Werkstoff gebildet ist.

Ferner ist es vorteilhaft, dass die Kupplungsglocke über eine flexible Kupplung mit der zweiten Welle verbunden ist. Solch eine flexible Kupplung kann beispielsweise als Klauenkupplung ausgestaltet sein. Somit kann im normalen Betrieb des Dampfmotors bei gesperrtem Freilauf das Drehmoment über die Klauenkupplung auf die zweite Welle, die eine Welle des Verbrennungsmotors sein kann, übertragen werden.

Vorteilhaft ist es auch, dass die erste Welle einen konischen Abschnitt aufweist, dass das Zwischenrad eine konische Aufnahme aufweist, die den konischen Abschnitt der ersten Welle aufnimmt, und dass zum Verbinden des Zwischenrads mit der ersten Welle der konische Abschnitt mittels einer Spannmutter gegen die konische Aufnahme beaufschlagt ist. Hierdurch kann eine zuverlässige Verbindung bei einer kompakten Ausgestaltung realisiert werden.

Außerdem ist es vorteilhaft, dass eine Steuerung vorgesehen ist und dass die Steuerung zum Starten des Dampfmotors die Erzeugung der elektromagnetischen Betätigungskraft befiehlt. Hierbei kann die Steuerung direkt oder über einen elektrischen oder elektronischen Schalter die Magnetspule betätigen, um den Freilauf zu überbrücken, wenn der Dampfdruck ausreichend groß ist. Nach dem Anlaufen des Dampfmotors kann die Steuerung die elektromagnetische Betätigungskraft wieder aufheben, so dass die Kraftübertragung von dem Dampfmotor auf den Verbrennungsmotor über den gesperrten Freilauf erfolgt.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigt:
Fig. 1 eine Anordnung mit einem Verbrennungsmotor und einem Dampfmotor, die über eine elektromagnetische Schaltkupplung miteinander verbunden sind, in einer schematischen Darstellung entsprechend einer möglichen Ausgestaltung der Erfindung;
Fig. 2 die in Fig. 1 dargestellte elektromagnetische Schaltkupplung entsprechend einem ersten Ausführungsbeispiel in einer schematischen Schnittdarstellung und
Fig. 3 die in Fig. 2 dargestellte elektromagnetische Schaltkupplung entsprechend einem zweiten Ausführungsbeispiel der Erfindung.

### Ausführungsformen der Erfindung

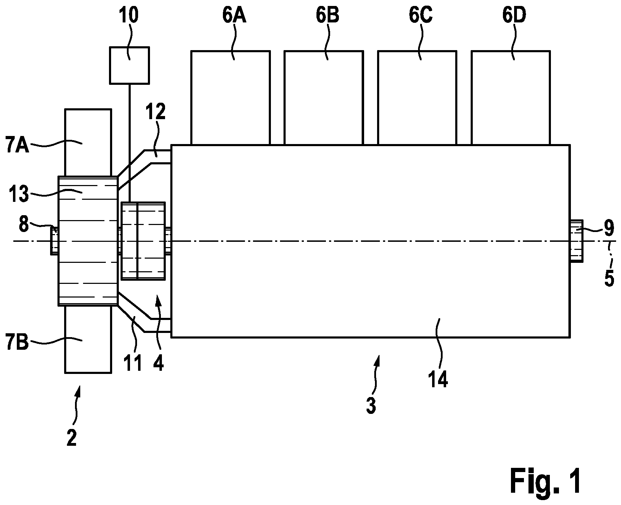

Fig. 1 zeigt eine Anordnung 1 mit einem Dampfmotor 2 und einem Verbrennungsmotor 3, die über eine elektromagnetische Schaltkupplung 4 miteinander verbunden sind, entsprechend einer möglichen Ausgestaltung der Erfindung. Die elektromagnetische Schaltkupplung 4 ist hierbei nicht notwendigerweise in einer festen Anordnung mit dem Dampfmotor 2 und dem Verbrennungsmotor 3 ausgestaltet und kann unabhängig von dem Dampfmotor 2 und dem Verbrennungsmotor 3 hergestellt und vertrieben werden. Im konkreten Anwendungsfall, insbesondere bei einem Kraftfahrzeug, beispielsweise einem Nutzkraftwagen, kann die elektromagnetische Schaltkupplung 4 entsprechend der Anordnung 1 zwischen dem Dampfmotor 2 und dem Verbrennungsmotor 3 montiert sein. Allerdings sind auch andere Anordnungen möglich. Insbesondere können anstelle einer gemeinsamen Drehachse 5 des Dampfmotors 2 und des Verbrennungsmotors 3 auch mehrere voneinander verschiedene Drehachsen vorgesehen sein. Speziell kann der Dampfmotor 2 auch seitlich an dem Verbrennungsmotor 3 angeordnet sein, wobei ein Getriebe über Zahnriemen oder Zahnräder eine Übertragung des Drehmoments ermöglicht.

In diesem Ausführungsbeispiel weist der Verbrennungsmotor 3 vier Zylinder 6A, 6B, 6C, 6D auf. Ferner weist der Dampfmotor 2 einander gegenüberliegende Zylinder 7A, 7B auf. Die Zylinder 7A, 7B des Dampfmotors 2 wirken auf eine erste Welle 8, die von dem Dampfmotor 2 antreibbar ist. In diesem Ausführungsbeispiel ist die erste Welle 8 die Welle des Dampfmotors 2. Die Zylinder 6A bis 6D wirken auf eine zweite Welle 9 ein, die somit von dem Verbrennungsmotor 3 antreibbar ist. In diesem Ausführungsbeispiel ist die zweite Welle 9 eine Welle des Verbrennungsmotors 3.

Die elektromagnetische Schaltkupplung 4 ist zwischen dem Dampfmotor 2 und dem Verbrennungsmotor 3 angeordnet. Die elektromagnetische Schaltkupplung 4 umfasst die erste Welle 8 und die zweite Welle 9. Da die erste Welle 8 zugleich die Welle 8 des Dampfmotors 2 ist und die zweite Welle 9 zugleich die Welle des Verbrennungsmotors 3 ist, ergibt sich in diesem Ausführungsbeispiel eine kompakte Ausgestaltung der Anordnung 1. Allerdings können die einzelnen Wellen auch über geeignete Getriebe, insbesondere Zahnriemen oder Zahnräder, miteinander verbunden sein.

Die elektromagnetische Schaltkupplung 4 umfasst außerdem eine Steuerung 10. Die Steuerung 10 kann hierbei Teil einer zentralen oder dezentralen Steuerung des Kraftfahrzeugs sein oder durch eine solche angesteuert werden. Außerdem sind Haltearme 11, 12 vorgesehen, die ein Gehäuseteil 13 des Dampfmotors 2 mit einem Motorblock 14 des Verbrennungsmotors 3 verbinden.

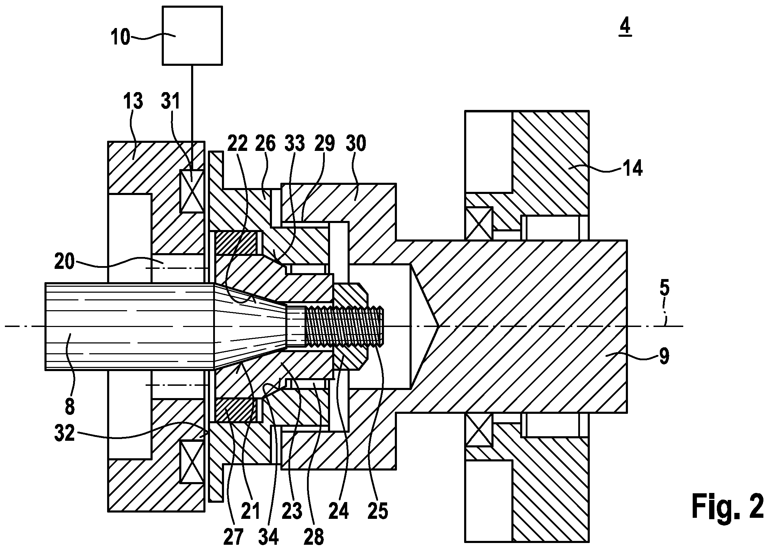

Fig. 2 zeigt die in Fig. 1 dargestellte elektromagnetische Schaltkupplung 4 entsprechend einem ersten Ausführungsbeispiel in einer schematischen Schnittdarstellung. Die erste Welle 8 ist in diesem Ausführungsbeispiel in dem Gehäuseteil 13 mittels eines Lagers 20 gelagert. Die erste Welle 8 weist einen konischen Abschnitt 21 auf, der in eine konische Ausnehmung 22 eines Zwischenrads 23 eingesetzt ist. Hierdurch ist das Zwischenrad 23 auf die erste Welle 8 aufgesetzt. Ferner ist eine Spannmutter 24 vorgesehen, die auf ein endseitiges Gewinde 25 der ersten Welle 8 aufgeschraubt ist. Mit der Spannmutter 24 wird das Zwischenrad 23 an den konischen Abschnitt 21 der ersten Welle 8 angepresst, so dass eine reibschlüssige Verbindung zwischen der ersten Welle 8 und dem Zwischenrad 23 gebildet ist. Somit ist das Zwischenrad 23 mittels der Spannmutter 24 zuverlässig auf die erste Welle 8 aufgeschraubt.

Die Schaltkupplung 4 umfasst ferner eine Kupplungsglocke 26. Zwischen der Kupplungsglocke 26 und dem Zwischenrad 23 ist ein Freilauf 27 vorgesehen. Der Freilauf 27 ist so ausgestaltet, dass die Kupplungsglocke 26 entsprechend einer Drehrichtung der zweiten Welle 9 um die Drehachse 5 frei laufen kann. Andererseits nimmt bei solch einer Drehbewegung das Zwischenrad 23 die Kupplungsglocke 26 über den Freilauf 27 mit. Als zusätzliche Abstützung ist außerdem ein Lager 28 vorgesehen, das gegebenenfalls auch entfallen kann.

Entsprechend der von dem Verbrennungsmotor 3 prinzipbedingt vorgegebenen Drehrichtung der zweiten Welle 9 kann somit auch die Kupplungsglocke 26 gegenüber der ersten Welle 8 frei laufen. Speziell bei still stehendem Dampfmotor 2 kann somit der Verbrennungsmotor 3 anlaufen, ohne dass der Dampfmotor 2 mitgenommen wird. Hierdurch wird zum einen das Starten des Verbrennungsmotors 3 erleichtert und zum anderen der Wirkungsgrad in der Startphase verbessert. Läuft hingegen der Dampfmotor 2, dann kann über den nun gesperrten Freilauf 27 das Drehmoment des Dampfmotors 2 von der ersten Welle 8 auf die zweite Welle 9 übertragen werden.

Somit ist im normalen Betrieb des Dampfmotors 2, der am Verbrennungsmotor 3 angeordnet ist, der Freilauf 27 gesperrt und das Drehmoment übertragbar. Hierbei kann die Kupplungsglocke 26 über eine flexible Kupplung 29 von der Kupplungsglocke 26 auf die zweite Welle 9 übertragen werden. Hierbei kann an der zweiten Welle 9 eine Klaue 30 vorgesehen sein. Die flexible Kupplung 29 ist dann als Klauenkupplung 29 ausgestaltet. Somit kann das Drehmoment des Dampfmotors 2 über den gesperrten Freilauf 27 und die flexible Kupplung 29 auf die zweite Welle 9 des Verbrennungsmotors 3 übertragen werden.

Wenn der Verbrennungsmotor 3 startet und der Motorblock 14 noch kalt ist, dann liegt in der Regel auch nicht genügend Abwärme vor, um einen zum Betrieb des Dampfmotors 2 erforderlichen Dampfdruck des zugehörigen Dampfkreises aufzubauen. Über den nun aktiven Freilauf 27 kann der Verbrennungsmotor 3 starten, ohne dass der Dampfmotor 2 mitgeschleppt werden muss.

Wenn aufgrund der Abwärme des Verbrennungsmotors 3 ein ausreichender Dampfdruck aufgebaut ist, dann befiehlt die Steuerung 10 eine elektromagnetische Betätigung der elektromagnetischen Schaltkupplung 4.

In diesem Ausführungsbeispiel ist das Gehäuseteil 13 aus einem ferromagnetischen Material gebildet. Hierbei ist in das Gehäuseteil 13 des Dampfmotors 2 eine Magnetspule 31 eingesetzt, die direkt oder über einen elektrischen oder elektronischen Schalter mit der Steuerung 10 verbunden ist. Wenn die Steuerung 10 die Magnetspule 31 mit Strom beaufschlagt, dann wird der aus dem Gehäuseteil 13 und der Magnetspule 31 gebildete Elektromagnet 13, 31 aktiviert. In diesem Ausführungsbeispiel ist außerdem auch die Kupplungsglocke 26 aus einem ferromagnetischen Material gebildet. Bei aktivierten Magneten 13, 31 wird somit die Kupplungsglocke 26 in Richtung auf das Gehäuseteil 13 mit einer elektromagnetischen Betätigungskraft beaufschlagt. Hierbei ist eine Stirnfläche 32 der Kupplungsglocke 26 in vorteilhafter Weise dem Magneten 13, 31 zugeordnet.

Die Kupplungsglocke 26 ist so gelagert, dass diese über das Lager 28 und den noch nicht gesperrten Freilauf 27 axial verschiebbar ist. Durch die Betätigungskraft wird nun eine axiale Verschiebung der Kupplungsglocke 26 bewirkt, bis die Kupplungsglocke 26 am Zwischenrad 23 anliegt.

In diesem Ausführungsbeispiel weist das Zwischenrad 23 eine konische Reibfläche 33 auf, die mit einer konischen Reibfläche 34 der Kupplungsglocke 26 zusammenwirkt. Durch die elektromagnetische Betätigungskraft wird ein Reibschluss zwischen der konischen Reibfläche 33 des Zwischenrads 23 und der konischen Reibfläche 34 der Kupplungsglocke 26 hergestellt. Durch die erzeugte Reibung wird der Dampfmotor 2 angeschleppt und mitgenommen.

Sobald der Dampfmotor 2 zumindest näherungsweise die Drehzahl des Verbrennungsmotors 3 erreicht hat und aus eigener Kraft weiterläuft oder sogar ein zusätzliches Drehmoment auf den Verbrennungsmotor 3 übertragen werden kann, wird die Magnetspule 31 wieder abgeschaltet. Somit wird der Reibschluss zwischen den Reibflächen 33, 34 wieder gelöst. In diesem Betriebszustand ist der Freilauf 27 gesperrt, so dass der Dampfmotor 2 seine Arbeit an den Verbrennungsmotor 3 abgeben kann.

Je nach Ausgestaltung der Anordnung 1 wird somit die Drehzahl der ersten Welle 8 durch Bestromen der Magnetspule 31 und somit Betätigen der Kupplungsglocke 26 auf die Drehzahl der zweiten Welle 9 gebracht. Anschließend läuft die erste Welle 8 mit der Drehzahl der zweiten Welle 9, wobei eine Übertragung eines zusätzlichen Drehmoments von der ersten Welle 8 auf die zweite Welle 9 über den gesperrten Freilauf 27 möglich ist.

Somit kann insbesondere eine Anlaufhilfe für den Dampfmotor 2 gewährleistet werden.

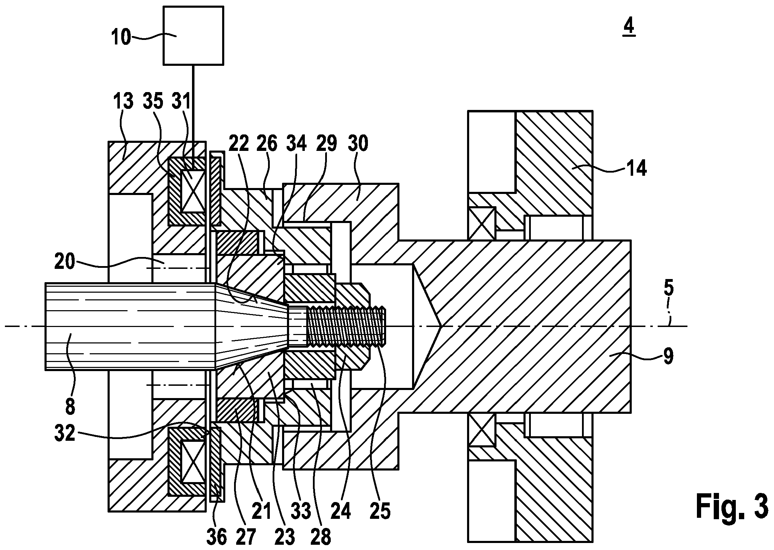

Fig. 3 zeigt die in Fig. 2 dargestellte elektromagnetische Schaltkupplung 4 entsprechend einem zweiten Ausführungsbeispiel. In diesem Ausführungsbeispiel ist der Elektromagnet 31, 35 durch ein ferromagnetisches Element 35 und die Magnetspule 31 gebildet. Das ferromagnetische Element 35 ist hierbei in das Gehäuseteil 13 eingesetzt. Das Gehäuseteil 13 kann dadurch aus einem nichtmagnetischen Werkstoff gebildet sein. Außerdem ist in diesem Ausführungsbeispiel auch die Kupplungsglocke 26 aus einem nichtmagnetischen Werkstoff gebildet. In die Kupplungsglocke 26 ist deshalb ein ferromagnetisches Element 36 eingefügt. Hierbei können auch mehrere ferromagnetische Elemente an dem Gehäuseteil 13 und/oder an der Kupplungsglocke 26 vorgesehen sein. Das ferromagnetische Element 36 ist im Bereich der Stirnfläche 32 der Kupplungsglocke 26 angeordnet und dem Magneten 31, 35 zugeordnet. Durch Bestromen der Magnetspule 31 erzeugt der Elektromagnet 31, 35 eine elektromagnetische Betätigungskraft auf das ferromagnetische Element 36, die zu einer Verstellung der Kupplungsglocke 26 führt.

Außerdem ist die Reibfläche 33 an dem Zwischenrad 23 in diesem Ausführungsbeispiel als ringförmige Reibfläche 33 ausgestaltet. Ferner ist auch die Reibfläche 34 an der Kupplungsglocke 26 als ringförmige Reibfläche 34 ausgestaltet. Die Reibflächen 33, 34 sind hierbei senkrecht zu der Drehachse 5 orientiert. Ferner sind die Reibflächen 33, 34 einander zugewandt. Somit kann über die senkrecht zur Betätigungskraft orientierten Reibflächen 33, 34 ein Reibschluss gebildet werden.

Es ist anzumerken, dass auch eine andere Kombination der beschriebenen Varianten möglich ist. Insbesondere können die ringförmigen Reibflächen 33, 34, die anhand der Fig. 3 beschrieben sind, auch bei dem anhand der Fig. 2 beschriebenen Ausführungsbeispiel, bei dem das Gehäuseteil 13 und die Kupplungsglocke 26 aus ferromagnetischen Materialen gebildet sind, zum Einsatz kommen.

Bei der anhand der Fig. 3 beschriebenen Ausgestaltung des Elektromagneten 31, 35 kann der Elektromagnet als vormontierte Einheit hergestellt werden, der dann im Gehäuse 13 des Dampfmotors 2 verbaut wird. Hierdurch können die Bereiche um den Magnetkreis als separate Bauteile ausgeführt werden.

Die Erfindung ist nicht auf die beschriebenen Ausführungsbeispiele beschränkt.

## Patentansprüche

1. Elektromagnetische Schaltkupplung (4), für das Verbinden von einem Dampfmotor (2) mit einem Verbrennungsmotor (3), wobei eine erste Welle (8), die von dem Dampfmotor (2) antreibbar ist, und eine zweite Welle (9), die von dem Verbrennungsmotor (3) antreibbar ist, vorgesehen sind, wobei ein Zwischenrad (23), das mit der ersten Welle (8) verbunden ist, und eine Kupplungsglocke (26), die zumindest mittelbar mit der zweiten Welle (9) verbunden ist, vorgesehen sind, wobei ein Freilauf (27) zwischen dem Zwischenrad (23) und der Kupplungsglocke (26) vorgesehen ist, der zum Übertragen einer Drehbewegung von dem mit der ersten Welle (8) verbundenen Zwischenrad (23) auf die Kupplungsglocke (26) dient und einen freien Lauf der Kupplungsglocke (26) in Bezug auf das Zwischenrad (23) ermöglicht, und wobei durch eine elektromagnetische Betätigungskraft zumindest mittelbar eine Reibkraft und/oder ein Formschluss zwischen dem Zwischenrad (23) und der Kupplungsglocke (26) erzeugbar ist, **dadurch gekennzeichnet, dass** die erste Welle (8) einen konischen Abschnitt (21) aufweist, dass das Zwischenrad (23) eine konische Aufnahme (22) aufweist, die den konischen Abschnitt (21) der ersten Welle (8) aufnimmt, und dass zum Verbinden des Zwischenrads (23) mit der ersten Welle (8) der konische Abschnitt (21) mittels einer Spannmutter (24) gegen die konische Aufnahme (22) beaufschlagt ist.

2. Elektromagnetische Schaltkupplung nach Anspruch 1,
**dadurch gekennzeichnet,**
**dass** das Zwischenrad (23) eine konische Reibfläche (33) aufweist, dass die Kupplungsglocke (26) eine konische Reibfläche (34) aufweist, dass die konische Reibfläche (33) des Zwischenrads (23) und die konische Reibfläche (34) der Kupplungsglocke (26) einander zugewandt sind und dass durch die elektromagnetische Betätigungskraft die konische Reibfläche (33) des Zwischenrads (23) und die konische Reibfläche (34) der Kupplungsglocke (26) gegeneinander beaufschlagt werden.

3. Elektromagnetische Schaltkupplung nach Anspruch 1,
**dadurch gekennzeichnet,**
**dass** das Zwischenrad (23) eine ringförmige Reibfläche (33) aufweist, dass die Kupplungsglocke (26) eine ringförmige Reibfläche (34) aufweist, dass die ringförmige Reibfläche (33) des Zwischenrads (23) und die ringförmige Reibfläche (34) der Kupplungsglocke (26) senkrecht zu einer Drehachse (5) der ersten Welle (8) orientiert und einander zugewandt sind und dass durch die elektromagnetische Betätigungskraft die ringförmige Reibfläche (33) des Zwischenrads (23) und die ringförmige Reibfläche (34) der Kupplungsglocke (26) gegeneinander beaufschlagt werden.

4. Elektromagnetische Schaltkupplung nach einem der Ansprüche 1 bis 3,
**dadurch gekennzeichnet,**
**dass** die Kupplungsglocke (26) zumindest teilweise aus einem ferromagnetischen Werkstoff gebildet ist und/oder dass an der Kupplungsglocke (26) zumindest ein ferromagnetisches Element (36) angeordnet ist.

5. Elektromagnetische Schaltkupplung nach einem der Ansprüche 1 bis 4, **gekennzeichnet durch** ein Gehäuseteil (13) für den Dampfmotor (2), wobei eine Stirnseite (32) der Kupplungsglocke (26) dem Gehäuseteil (13) zugewandt ist und dass an dem Gehäuseteil (13) ein Elektromagnet (31) angeordnet ist, der der Stirnseite der Kupplungsglocke zugeordnet ist.

6. Elektromagnetische Schaltkupplung nach Anspruch 5,
**dadurch gekennzeichnet,**
**dass** das Gehäuseteil (13) für den Dampfmotor (2) aus einem ferromagnetischen Werkstoff gebildet ist.

7. Elektromagnetische Schaltkupplung nach einem der Ansprüche 1 bis 6,
**dadurch gekennzeichnet,**
**dass** die Kupplungsglocke (26) über eine flexible Kupplung (29) mit der zweiten Welle (9) verbunden ist.

8. Elektromagnetische Schaltkupplung nach Anspruch 7,
**dadurch gekennzeichnet,**
**dass** die flexible Kupplung (29) als Klauenkupplung (29, 30) ausgestaltet ist.

9. Elektromagnetische Schaltkupplung nach einem der Ansprüche 1 bis 8,
**dadurch gekennzeichnet,**
**dass** eine Steuerung (10) vorgesehen ist und dass die Steuerung ausgestaltet ist, zum Starten des Dampfmotors (2) die Erzeugung der elektromagnetischen Betätigungskraft zu befehlen.

## Claims

1. Electromagnetic clutch (4), for connecting a steam engine (2) to a combustion engine (3), wherein a first shaft (8) which can be driven by the steam engine (2) and a second shaft (9) which can be driven by the internal combustion engine (3) are provided, wherein an intermediate gear (23) which is connected to the first shaft (8) and a clutch bell (26) which is at least indirectly connected to the second shaft (9) are provided, wherein a freewheel (27) is provided between the intermediate gear (23) and the clutch bell (26), which freewheel serves to transmit a rotational movement from the intermediate gear (23), which is connected to the first shaft (8), to the clutch bell (26) and permits freewheeling of the clutch bell (26) relative to the intermediate gear (23), and wherein a friction force and/or positive locking can be generated between the intermediate gear (23) and the clutch bell (26) by an electromagnetic actuation force, **characterized in that** the first shaft (8) has a conical portion (21), **in that** the intermediate gear (23) has a conical receptacle (22) which receives the conical portion (21) of the first shaft (8), and **in that**, for the connection of the intermediate gear (23) to the first shaft (8), the conical portion (21) is loaded against the conical receptacle (22) by means of a clamping nut (24).

2. Electromagnetic clutch according to Claim 1,
**characterized**
**in that** the intermediate gear (23) has a conical friction surface (33), in that the clutch bell (26) has a conical friction surface (34), in that the conical friction surface (33) of the intermediate gear (23) and the conical friction surface (34) of the clutch bell (26) face toward one another, and in that the conical friction surface (33) of the intermediate gear (23) and the conical friction surface (34) of the clutch bell (26) are loaded against one another by the electromagnetic actuation force.

3. Electromagnetic clutch according to Claim 1,
**characterized**
**in that** the intermediate gear (23) has an annular friction surface (33), in that the clutch bell (26) has an annular friction surface (34), in that the annular friction surface (33) of the intermediate gear (23) and the annular friction surface (34) of the clutch bell (26) are oriented perpendicular to an axis of rotation (5) of the first shaft (8) and face toward one another, and in that the annular friction surface (33) of the intermediate gear (23) and the annular friction surface (34) of the clutch bell (26) are loaded against one another by the electromagnetic actuation force.

4. Electromagnetic clutch according to one of Claims 1 to 3,
**characterized**
**in that** the clutch bell (26) is formed at least partially from a ferromagnetic material, and/or in that at least one ferromagnetic element (36) is arranged on the clutch bell (26).

5. Electromagnetic clutch according to one of Claims 1 to 4,
**Characterized by** a housing part (13) for the steam engine (2), wherein an end side (32) of the clutch bell (26) faces toward the housing part (13), and in that an electromagnet (31) is arranged on the housing part (13), which electromagnet is assigned to the end side of the clutch bell.

6. Electromagnetic clutch according to Claim 5,
**characterized**
**in that** the housing part (13) for the steam engine (2) is formed from a ferromagnetic material.

7. Electromagnetic clutch according to one of Claims 1 to 6,
**characterized**
**in that** the clutch bell (26) is connected to the second shaft (9) via a flexible coupling (29).

8. Electromagnetic clutch according to Claim 7,
**characterized**
**in that** the flexible coupling (29) is designed as a claw coupling (29, 30).

9. Electromagnetic clutch according to one of Claims 1 to 8,
**characterized**
**in that** a controller (10) is provided, and in that the controller is designed to demand the generation of the electromagnetic actuation force for the purpose of starting the steam engine (2).

## Revendications

1. Embrayage électromagnétique (4) pour la connexion d'un moteur à vapeur (2) à un moteur à combustion interne (3), un premier arbre (8), qui peut être entraîné par le moteur à vapeur (2), et un deuxième arbre (9), qui peut être entraîné par le moteur à combustion interne (3), étant prévus, une roue intermédiaire (23) qui est connectée au premier arbre (8) et une cloche d'embrayage (26) qui est connectée de manière au moins indirecte au deuxième arbre (9), étant prévues, une roue libre (27) étant prévue entre la roue intermédiaire (23) et la cloche d'embrayage (26), laquelle sert au transfert d'un mouvement de rotation de la roue intermédiaire (23) connectée au premier arbre (8) à la cloche d'embrayage (26) et permet un libre roulement de la cloche d'embrayage (26) par rapport à la roue intermédiaire (23), et une force de frottement et/ou un engagement par correspondance de formes entre la roue intermédiaire (23) et la cloche d'embrayage (26) pouvant être généré au moins indirectement par une force d'actionnement électromagnétique, **caractérisé en ce que** le premier arbre (8) présente une portion conique (21), **en ce que** la roue intermédiaire (23) présente un logement conique (22) qui reçoit la portion conique (21) du premier arbre (8), et **en ce que** pour connecter la roue intermédiaire (23) au premier arbre (8), la portion conique (21) est sollicitée au moyen d'un écrou de serrage (24) contre le logement conique (22).

2. Embrayage électromagnétique selon la revendication 1,
**caractérisé en ce que**
la roue intermédiaire (23) présente une surface de friction conique (33), **en ce que** la cloche d'embrayage (26) présente une surface de friction conique (34), **en ce que** la surface de friction conique (33) de la roue intermédiaire (23) et la surface de friction conique (34) de la cloche d'embrayage (26) sont tournées l'une vers l'autre et **en ce que** la surface de friction conique (33) de la roue intermédiaire (23) et la surface de friction conique (34) de la cloche d'embrayage (26) sont sollicitées l'une contre l'autre par la force d'actionnement électromagnétique.

3. Embrayage électromagnétique selon la revendication 1,
**caractérisé en ce que**
la roue intermédiaire (23) présente une surface de friction annulaire (33), **en ce que** la cloche d'embrayage (26) présente une surface de friction annulaire (34), **en ce que** la surface de friction annulaire (33) de la roue intermédiaire (23) et la surface de friction annulaire (34) de la cloche d'embrayage (26) sont orientées perpendiculairement à un axe de rotation (5) du premier arbre (8) et sont tournées l'une vers l'autre et **en ce que** la surface de friction annulaire (33) de la roue intermédiaire (23) et la surface de friction annulaire (34) de la cloche d'embrayage (26) sont sollicitées l'une contre l'autre par la force d'actionnement électromagnétique.

4. Embrayage électromagnétique selon l'une quelconque des revendications 1 à 3,
**caractérisé en ce que**
la cloche d'embrayage (26) est formée au moins en partie d'un matériau ferromagnétique et/ou **en ce qu'**au moins un élément ferromagnétique (36) est disposé sur la cloche d'embrayage (26).

5. Embrayage électromagnétique selon l'une quelconque des revendications 1 à 4,
**caractérisé par**
une partie de boîtier (13) pour le moteur à vapeur (2), un côté frontal (32) de la cloche d'embrayage (26) étant tourné vers la partie de boîtier (13), et en ce qu'un électroaimant (31) est disposé au niveau de la partie de boîtier (13), lequel est associé au côté frontal de la cloche d'embrayage.

6. Embrayage électromagnétique selon la revendication 5,
**caractérisé en ce que**
la partie de boîtier (13) pour le moteur à vapeur (2) est formée d'un matériau ferromagnétique.

7. Embrayage électromagnétique selon l'une quelconque des revendications 1 à 6,
**caractérisé en ce que**
la cloche d'embrayage (26) est connectée au deuxième arbre (9) par le biais d'un embrayage flexible (29).

8. Embrayage électromagnétique selon la revendication 7, **caractérisé en ce que**
l'embrayage flexible (29) est réalisé sous forme d'embrayage à griffes (29, 30).

9. Embrayage électromagnétique selon l'une quelconque des revendications 1 à 8,
**caractérisé en ce**
**qu'**il est prévu une commande (10) et **en ce que** la commande est configurée pour commander la génération de la force d'actionnement électromagnétique pour le démarrage du moteur à vapeur (2).
